# EUROPÄISCHE PATENTSCHRIFT

(11) **EP 1 281 884 B1**
(45) Veröffentlichungstag und Bekanntmachung des Hinweises auf die Patenterteilung: **11.02.2009**
(21) Anmeldenummer: 02012264.4
(22) Anmeldetag: 04.06.2002
(51) Int. Cl.: F16D 1/072, F16D 1/08

(54) **Baureihe von Wellen und Verfahren zur Fertigung**
Series of shafts and manufacturing method therefore
Game d'arbres et procédé de leur fabrication

(30) Priorität: 30.07.2001 DE 10137024
(43) Veröffentlichungstag der Anmeldung: 05.02.2003
(73) Patentinhaber: Sew-Eurodrive GmbH & Co. KG, 76646 Bruchsal (DE)
(72) Erfinder: Häcker, Uwe, 76356 Weingarten (DE)

(56) Entgegenhaltungen:
- EP-A- 0 482 929
- EP-A- 0 661 474
- DD-A- 292 860
- DE-A- 4 134 552
- US-A- 4 886 392

## Beschreibung

Die Erfindung betrifft eine Baureihe von Wellen zur Befestigung in einer Bohrung eines Aufnahmeteiles. Die Erfindung umfasst auch anstatt der Wellen-Befestigung entsprechend ausgeführte Schaft-Befestigungen.

Aus der EP 0 339 380 B1 ist eine Vorrichtung zur koaxialen drehfesten Verbindung zweier Teile bekannt, bei der ein Quergewindestift zur axialen Fixierung eingesetzt wird. Die Vorrichtung ist jedoch aufwendig zu fertigen, da der Quergewindestift ein zusätzliches Teil darstellt und eine entsprechende Gewindebohrung zu fertigen ist.

Aus der DE 37 32 223 C2 ist ein Presspassungsaufbau für eine Rotorwelle bekannt. Dabei wird eine Welle mit ihrem verzahnten Bereich eingeführt in eine Bohrung eines Aufnahmeteils, wobei beim formschlüssigen Einpressen Späne entstehen. Zum Sammeln der beim formschlüssigen Einpressen entstehenden Späne sind Ringnuten vorgesehen. Außerdem weist die Welle mindestens zwei Passbereiche (Fig. 4, 6, 7) auf. Die Fertigung des Presspassungsaufbaus ist somit insbesondere wegen der mindestens zwei Passbereiche und den Ringnuten aufwendig und kostspielig.

Aus der DE 41 34 552 A1 ist eine Ritzel-Befestigung für Planetengetriebe bekannt, bei der ein Ritzel mit einem Passbereich und einer genormten, gehärteten und geschliffenen Rändelverzahnung versehen ist und in das Aufnahmeteil bei erhöhter Temperatur eingepresst wird. Zum Sammeln der Späne sind ebenfalls Ringnuten vorgesehen. Der Passbereich und die Verzahnung weisen verschiedene Außendurchmesser auf. Die Fertigung dieser Ritzel-Befestigung ist ebenfalls aufwendig und kostspielig, insbesondere wegen den Ringnuten und den verschiedenen Außendurchmessern der Verzahnung und des Passbereichs.

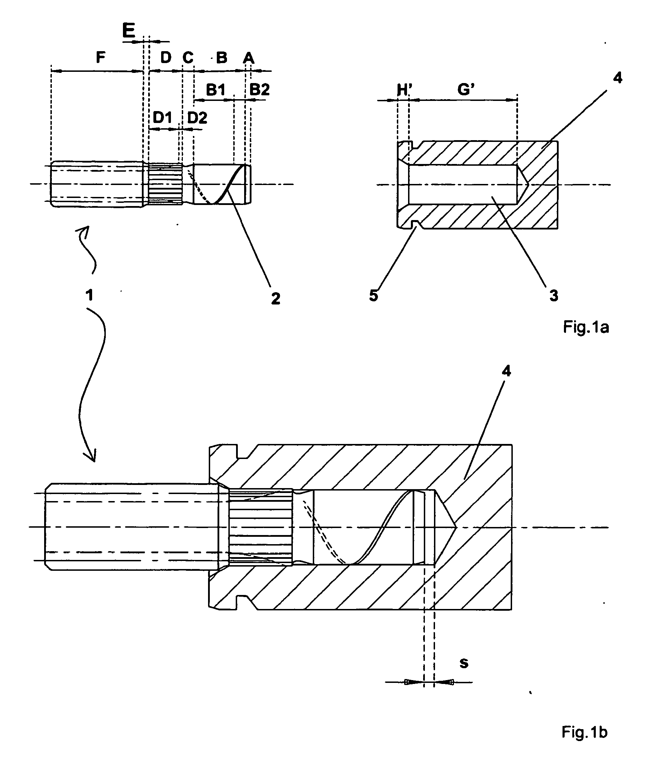

Aus der EP 0 784 758 B1 ist eine Wellen-Befestigung bekannt, die zwei Passbereiche (Fig. 1 und 2, Bereiche A und C) aufweist. Beim Einführen der Welle in die Bohrung eines Aufnahmeteils wird der Formschluss durch ein formschlüssigen Einpressen erreicht. Das Drehmoment wird von dem verzahnten oder gerändelten Bereich B übertragen. Nachteilig ist, dass der Bereich B keine Axialkräfte übertragen kann. Nachteilig ist auch, dass zwei Passbereiche notwendig sind, da somit eine große Baulänge notwendig ist. Außerdem ist die Fertigung zweier Passbereiche sehr kostspielig. Des Weiteren weist die Bohrung drei verschiedene Durchmesser auf, die ebenfalls aufwendig zu fertigen sind. Wesentlicher weiterer Nachteil ist auch, dass die Verzahnung oder Rändelung des Bereiches B nach einer gewissen Betriebszeit Verschleiß aufweisen kann, der sogar zum Ausschlagen führen kann. Wenn der Bereich B bei der Drehmomentübertragung versagt ist keine Drehmomentübertragung mehr ausführbar. Somit könnten in diesem Fall sogar Menschen gefährdet werden. Auch im Fall des nur geringen Verschleißes tritt schon in Normalbetrieb Geräuschbildung auf, da die Zähne der Verzahnung oder Rändelung im Bereich B und ***G'*** aufeinanderschlagen abhängig von Drehzahlschwankungen. Die notwendigen Bereiche A und C stellen ausschließliche Zentrierhilfen dar, die nichts zur Drehmomentübertragung beitragen.

Aus der EP 0 661 474 B1 ist eine Wellen-Befestigung bekannt, die ebenfalls zwei Passbereiche und eine Bohrung mit drei verschiedenen Durchmessern aufweist. Auch eine solche Wellen-Befestigung ist aufwendig zu fertigen. In einer anderen Variante derselben Schrift wird auch eine Wellenbefestigung mit nur zwei verschiedenen Durchmessern der Bohrung offenbart. Auch diese Variante ist kostspielig, da die Passbereiche und die Innenwände der Bohrung derart genau bearbeitet werden müssen, dass einerseits beim Einführen der Welle zum Einpressen in die Bohrung des Aufnahmeteils keine Späne entstehen und andererseits nach Einführen, also im eingepressten Zustand nach Montage, keine Zwischenräume zwischen der Welle und der Innenwand der Bohrung entstehen. Das Drehmoment wird von dem verzahnten oder gerändelten Bereich B übertragen. Nachteilig ist auch, dass der Bereich B keine Axialkräfte übertragen kann. Wesentlicher weiterer Nachteil ist des Weiteren, dass die Verzahnung oder Rändelung des Bereiches B nach einer gewissen Betriebszeit Verschleiß aufweisen kann, der sogar zum Ausschlagen führen kann. Wenn der Bereich B bei der Drehmomentübertragung versagt ist keine Drehmomentübertragung mehr ausführbar. Somit könnten in diesem Fall sogar Menschen gefährdet werden. Auch im Normalbetrieb tritt ein, wenn auch geringer, Verschleiß auf und erhöht somit das Spiel und die Geräuschbildung, da die Zähne der Verzahnung oder Rändelung im Bereich B und ***G'*** abhängig von Drehzahlschwankungen aufeinandertreffen. Die notwendigen Bereiche A und C stellen ausschließliche Zentrierhilfen dar, die nichts zur Drehmomentübertragung beitragen.

Der Erfindung liegt daher die Aufgabe zugrunde, eine Wellen-Befestigung weiterzubilden, wobei die Fertigungs- und Lagerkosten gering gehalten werden sollen und daher die Wellen-Befestigung kostengünstig mit wenig Aufwand herstellbar sein soll.

Erfindungsgemäß wird die Aufgabe bei der Wellen-Befestigung nach den in Anspruch 1 und bei dem Verfahren nach den in Anspruch 13 angegebenen Merkmalen gelöst.

Wesentliche Merkmale der Erfindung bei der Baureihe von Wellen ist, dass
a) die Welle mindestens sechs axiale Bereiche A, B, C, D, E und F besitzt, die in alphabetischer Reihenfolge der sie bezeichnenden Buchstaben aneinandergrenzen und von denen F einen größeren Außendurchmesser als A, B, C, D und/oder E hat,
b) innerhalb einer Baugröße mehrere Varianten von Wellen umfasst sind, die im Bereich F der Welle jeweils verschieden verzahnt sind,
c) bei jeder Welle der Bereich D verzahnt und/oder gerändelt ist,
d) innerhalb einer ersten Baugröße bei mindestens einer ersten Variante die durch die Zahnlücken der Verzahnung des Bereiches F gebildeten Ausnehmungen sich in ihren Fußzonen nicht in den Bereich D der Welle erstrecken, also der Bereich D keinen Teilbereich umfasst, in den sich die Ausnehmungen erstrecken;
e) innerhalb der ersten Baugröße bei mindestens einer zweiten Variante die durch die Zahnlücken der Verzahnung des Bereiches F gebildeten Ausnehmungen sich in ihren Fußzonen mindestens teilweise auch in den Bereich D der Welle erstrecken, also der Bereich D einen Teilbereich umfasst, in den sich die Ausnehmungen erstrecken, und der Bereich D weitere Teilbereiche umfasst, in denen keine solchen Ausnehmungen vorgesehen sind,
f) die Bohrung im Aufnahmeteil mindestens einen einen einzigen Innendurchmesser der Bohrung aufweisenden Bereich G' aufweist, wobei dem Bereich G' bei in dem Aufnahmeteil befestigter Welle mindestens die Bereiche B, C und D zugeordnet sind,
g) der Wellenbereich B bei in dem Aufnahmeteil befestigter Welle passgenau im entsprechenden Teil des Bohrungsbereichs G' liegt,
h) der Außendurchmesser des Bereiches D größer als der Außendurchmesser des Bereiches B ist,
i) der Außendurchmesser des Bereiches D kleiner als der Außendurchmesser des Bereiches F ist und
j) bei in dem Aufnahmeteil befestigter Welle diese mit ihrem verzahnten Bereich D infolge des Fügevorgangs, umfassend des Einführens der Welle in die Bohrung des Aufnahmeteils, formschlüssig in den entsprechenden Teil des Bereiches G' der Bohrung eingeschnitten ist.

Vorteil der Erfindung ist, dass der erste Verzahnungsbereich D einen größeren Außendurchmesser als der Bereich B aufweist. Somit genügt es, dass der Innendurchmesser der Bohrung im Bereich G', der den Bereichen B, C und D der Welle zugeordnet ist, konstant ausführbar ist. Somit ist die Bohrung einfach und kostengünstig ausführbar in einem einzigen Arbeitsgang. Zusätzlich ist die Bohrung beim Einführen der Welle gleichzeitig als Zentrierung, zur Erzeugung einer kraftschlüssigen Verbindung zur Ableitung axialer Kräfte und zur Erzeugung der formschlüssigen Verbindung zur Durchleitung von Drehmoment verwendbar. Denn der Bereich B ist derart ausführbar, dass zumindest ein Teilbereich B1 des Bereiches B eine reib- oder kraftschlüssige Verbindung erzeugt, die diejenigen axialen Kräfte überträgt, welche von dem gerändelten und/oder verzahnten Bereich D nicht übertragbar sind.

Von Vorteil ist bei der Erfindung auch, dass eine zentrische Aufnahme der zu befestigenden Welle oder Schaftes, insbesondere Ritzelschaftes, geschaffen ist. Nach Einhalten entsprechend hoher Montagegenauigkeiten beim Einführen der Welle in die Bohrung des Aufnahmeteils liegt der Passbereich B der Welle passgenau an der Innenoberfläche des entsprechenden Bereiches G' der Bohrung an, wobei das Wort ,passgenau' ein geringfügiges Über- oder Untermaß umfasst.

Durch die Konstruktionsweise ist vorteiligerweise eine hohe Stabilität gegen Querkräfte gegeben. Insbesondere ist der Bereich B in mindestens zwei Teilbereiche B1 und B2 aufteilbar, wobei der aufnahmeteil-seitige Teilbereich B2 einen Außendurchmesser aufweist kleiner ist als der Innendurchmesser der Bohrung im Aufnahmeteil im Bereich G'. Der Unterschied ist beispielsweise im Bereich von 1 bis 100 µm wählbar. Auf diese Weise zentriert der Teilbereich B2 die Welle beim Einführen in das Aufnahmeteil. Der Teilbereich B1 ist mit einem Außendurchmesser ausführbar, der um einen Wert zwischen 0 und 100 µm vom Innendurchmesser der Bohrung im Aufnahmeteil im Bereich G' größer ist. Somit stellt der Bereich B1 eine reib- und/oder kraftschlüssige Verbindung dar, die axiale Kräfte und sogar Drehmoment übertragbar macht. Das Erzeugen verschiedener Teilbereiche B1 und B2 mit geringfügig verschiedenen Durchmessern ist fertigungstechnisch ohne besonderen Aufwand ausführbar. Insbesondere ohne zu berücksichtigende Kostenerhöhung.

Weiterer Vorteil ist, dass sogar nach eventuellem Versagen der Rändelung oder Verzahnung des ersten Verzahnungsbereiches D mittels Passbereich B, insbesondere mittels des Teilbereiches B1, die Welle noch zentriert gehalten ist und zumindest axiale Kräfte über den Bereich B übertragbar sind.

Von Vorteil ist außerdem, dass die Fertigungs- und Lagerkosten gering gehalten werden, weil keine Kupplungen zwischen der Welle, insbesondere umfassend getriebeseitige Laufverzahnung, und dem Aufnahmeteil notwendig sind. Daher ist die Wellen-Befestigung kostengünstig mit wenig Aufwand herstellbar.

Von Vorteil ist außerdem, dass das Aufnahmeteil an seinem Ende mit einer Zentriereinrichtung vorsehbar ist, die zur zentrischen Aufnahme der Welle dient. Weil die axiale Ausdehnung des Bereiches B kleiner ist als die des Bereichs G' der Bohrung, ist die Welle während des Einführens der Welle in die Bohrung des Aufnahmeteils, insbesondere beim Einpressen der Rändelung des Bereiches D in das Material des Aufnahmeteils im Bereich G', geführt, weil der Außendurchmesser der Welle im Bereich B dem Innendurchmesser des Aufnahmeteils im Bereich G' passgenau entspricht. Dabei ist der Bereich B vorteilhaft in zwei Teilbereichen B1 und B2 ausführbar, wobei der zuerst in das Aufnahmeteil einzuführende Teilbereich B2 als Zentrierhilfe ausgeführt ist und der Teilbereich B1 als reib- und/oder kraftschlüssige Verbindung vorsehbar ist. Somit ist die Welle beim Einfädeln und Einführen zentrisch gehalten. Diese wichtige zentrische Führung wird erreicht, obwohl die Bohrung im Aufnahmeteil nur einen einzigen Innendurchmesser im Bereich G' aufweist und somit einfach und kostengünstig zu fertigen ist.

Wesentlicher Vorteil ist auch, dass die zentrische Führung durch die passgenau zueinander liegenden Bereich B und G' mit zunehmendem Einführen der Welle stärker wird. Querkräfte bewirken bei zunehmendem Einführen also eine immer geringere radiale Auslenkung der Welle.

Wesentlich bei der Erfindung ist, dass beim Einführen der Welle bei beginnendem Einschneiden des gerändelten Bereiches D der Welle in den Bereich G' der Bohrung des Aufnahmeteils die Führung durch den passgenau anliegenden Bereich B über die volle Länge dieses Bereiches B gegeben ist, da der Bereich B, insbesondere der Teilbereich B2, zuerst eingeführt werden muss und somit optimal als Führung wirkt. Auch der Teilbereich B1 stellt eine Zentrierhilfe beim Einführen dar.

Weiterer Vorteil ist bei der Erfindung, dass die Welle in den Bereichen B und C möglichst groß ausführbar ist, insbesondere nur wenig kleiner als der Außendurchmesser des verzahnten Bereiches F. Dies führt zu einer möglichst hohen Festigkeit, insbesondere bei Torsion.

Weiterer Vorteil ist bei der Erfindung, dass die Ausnehmungen der Zahnlücken des Bereiches F über den Bereich E und mindestens teilweise in den Bereich D hineinlaufen dürfen, ohne dass die Festigkeit oder andere wesentliche Eigenschaften der Wellen-Befestigung beachtenswert verschlechtert wären. Also ist auch mit der vorliegenden Erfindung die Verzahnung des Bereiches einfach und kostengünstig fertigbar bei gleichzeitig möglichst großem Durchmesser im Bereich B und D, also bei hoher Festigkeit. Das maximal durch die Wellen-Befestigung übertragbare Drehmoment erreicht also fast die theoretischen Werte einer Welle mit Außendurchmesser des Bereiches F.

Ein weiterer wesentlicher Kern der Erfindung ist, dass vorteiligerweise mit einer nur einseitigen Führung beim Einführen eine ausreichend hohe Zentriergenauigkeit erreichbar ist. Die Größe der Zentriergenauigkeit reicht sogar für einen Servoantrieb aus, insbesondere bei der Verbindung des Servomotors mit dem Servogetriebe. Gerade bei einem mit dem Servomotor zu verbindenden, schnell laufenden Planetengetriebe ist eine hohe Genauigkeit einzuhalten. Bei weiteren erfindungsgemäßen Ausführungsformen ist die Welle im Bereich F sogar als Sonne der eintreibenden ersten Getriebestufe verwendbar. Dabei ist eine hohe Zentriergenauigkeit der Welle einzuhalten, da die Sonne der ersten Getriebestufe, insbesondere des schnell laufenden Servogetriebes, äußerst genau zu zentrieren ist.

Bei verschiedenen Varianten innerhalb einer Baugröße sind Varianten von Wellen vorgesehen, die im Bereich F der Welle jeweils verschieden verzahnt sind. Innerhalb der Baugröße erstrecken sich also bei mindestens einer ersten Variante die durch die Zahnlücken der Verzahnung des Bereiches F gebildeten Ausnehmungen in ihren Fußzonen nicht in den Bereich D der Welle, also umfasst der Bereich D keinen Teilbereich, in den sich die Ausnehmungen erstrecken. Bei einer zweiten Variante derselben Baugröße erstrecken sich die schrägverzahnten Zahnlücken mindestens teilweise über den Bereich D und schneiden somit die Rändel-Zähne des Bereiches D. Wie sich überraschend herausgestellt hat, ist die formschlüssige Verbindung vorteiligerweise unabhängig von den Verzahnungsdaten ausreichend fest, also insbesondere unabhängig von dem Modul der Verzahnung. Dabei ist wichtig, dass der Rändel im Beriech D als geradverzahnt, also nicht schrägverzahnt, ausführbar ist, wohingegen die Verzahnung des Bereiches F der Welle vorteilhaft schrägverzahnt ausführbar ist. Der Bereich D1 der Welle ist also bei dieser Variante sowohl gerändelt als auch verzahnt.

Bei einer vorteilhaften Ausgestaltung ist im Bereich E ein radialer Übergang von dem etwas größeren Außendurchmesser des Bereiches F der Welle auf den etwas kleineren Außendurchmesser des Bereiches D vorgesehen. Vorteilhafterweise ist somit die Kerbwirkung und somit Versagensgefahr vermindert.

Bei einer vorteilhaften Ausgestaltung ist im Bereich C, also zwischen den Bereichen B und D, ein Freistich vorsehbar. Von Vorteil ist dabei, dass ein Spanraum für beim Einschneiden entstehende Späne vorhanden ist.

Bei einer vorteilhaften Ausgestaltung weist die Welle eine Spiralnut im Bereich B zur Entlüftung auf, also eine sich am Umfang entlang schraubende Nut. Überraschend ist dabei, dass die Festigkeit nicht leidet, obwohl die Spiralnut im Bereich B verläuft, der beim Führen und auch beim Betreiben Querkräfte an die Bohrungswand im Bereich G' weitergeben muss. Die Spiralnut schneidet dabei die auslaufenden Ausnehmungen der Rändelung des Bereiches D. Da die Spiralnut darüber hinaus einfach und kostengünstig zu fertigen ist, ist eine Entlüftung beim Einführen der Welle erreicht, ohne dass die Festigkeit oder andere wesentliche Eigenschaften verschlechtert wären. Die Entlüftung hat den Vorteil zur Folge, dass die Zentrierung einfacher und mit geringeren Querkräften ausführbar ist, weil die vor und im Bereich A, also dem aufnahmeteil-seitigen Ende der Welle, zusammengepresste Luft kontrolliert abströmen kann.

Bei einer vorteilhaften Ausgestaltung weist das Aufnahmeteil eine Montagenut auf zum Eingreifen und Abstützen eines Werkzeuges, mit der die Welle in das Aufnahmeteil einpressbar ist. Von Vorteil ist, dass somit die geforderte Zentriergenauigkeit beim Einpressen erreichbar ist.

Bei dem Verfahren zur Fertigung einer Wellen-Befestigung ist wesentlich, dass während des Einführens und/oder Einpressens eine Temperatur des Aufnahmeteils, insbesondere in seinem Inneren, und eine Temperatur der Welle, insbesondere in ihrem Inneren, ungleich sind, insbesondere unterscheidet sich die Temperatur des Aufnahmeteils und die Temperatur der Welle um mehr als 60 Kelvin. Von Vorteil ist dabei, dass eine besonders feste, in Teilbereichen des Bereiches B kraftschlüssige Verbindung nach Temperaturausgleich und dadurch bewirkter Schrumpfung entsteht. Außerdem wird auf diese Weise Spielfreiheit für die formschlüssige Verbindung im Bereich D erzeugt.

Weitere vorteilhafte Ausgestaltungen ergeben sich aus den Unteransprüchen.

### Bezugszeichenliste

1 Welle
2 Spiralnut
3 Bohrung
4 Aufnahmeteil
5 Montagenut

Die Erfindung wird nun anhand von Abbildungen näher erläutert:

In der Figur 1a ist ein Welle 1 und ein mit einer Bohrung 3 versehenes Aufnahmeteil 4 jeweils separat gezeigt. In der Figur 1b ist die Welle 1 und das Aufnahmeteil 4 im eingeführten, also befestigten Zustand gezeigt.

Dabei weist die Welle 1 an ihrem Aufnahmeteil-seitigen Ende einen Bereich A auf, an den sich ein zylindrisch geformten Bereich B anschließt. Der Bereich A ist abgeschrägt, um zusammen mit dem abgeschrägten Bereich H' der Bohrung 3 des Aufnahmeteils eine Zentrierhilfe für das Einfädeln der Welle 1 in die Bohrung 3 zu bilden. Der Bereich B ist mit einer Spiralnut (2) zum Entlüften versehen, also eine sich am Umfang entlang schraubende Nut.

An den Bereich B ist ein Bereich C angefügt, der mittels Freistich einen Spanraum für beim Einführen anfallende Späne bereit stellt. Wegen des Freistiches weist der Außendurchmesser im Bereich C kleinere Werte auf als in dessen benachbarte Bereichen.

Der sich anschließende Bereich D ist mit einer Rändelung versehen, die zum Einschneiden in den entsprechenden Teil des Bereiches G' der Bohrung dient. Bei der Fertigung wird dieser Bereich D zuerst mit einem Rändel versehen, danach gehärtet und am Ende durch Überschleifen auf einen definierten Außendurchmesser der Welle gebracht, der größer ist als der Innendurchmesser der Bohrung 3 im Bereich G'. Die Abweichung hat vorteilhaft einen Wert zwischen 10 µm und 100 µm.

Über einen Übergangsbereich E ist der Bereich F angeschlossen, der mit einer Verzahnung versehen ist. Der Übergangsbereich E ist rund ausgeführt, insbesondere mit einem Radius, um die Kerbwirkung zu vermeiden und die Festigkeit nicht zu vermindern.

Das Verzahnen, also Fertigen der Verzahnung, des Bereiches F umfasst die üblichen Fertigungsverfahren, wie insbesondere Fräsen unter Einsatz eines Fräsers oder Schleifen mittels einer Schleifscheibe. Wenn der Fusskreis der Zahnlücke im Bereich F kleiner als der größte Außendurchmesser im Bereich D ist, wird dabei auch in den benachbarten Bereich E und auch in den Bereich D zumindest teilweise eingeschnitten, weil das jeweilige Werkzeug auf einem Radius arbeitet.
Die durch die Zahnlücken der Verzahnung des Bereiches F gebildeten Ausnehmungen erstrecken sich dann somit in ihren Fußzonen mindestens teilweise auch bis in den Bereich D der Welle. Die axiale Ausdehnung des Bereiches D1, in welchem die Ausnehmungen verlaufen, hängt vom Radius der Werkzeuge und von den Dimensionierungen und Abmessungen der Welle ab. Die Verzahnung des Bereiches D ist mit einer Schrägverzahnung ausgeführt. Daher ist ein geräuscharmer Betrieb der den Bereich F umfassenden Getriebestufe ermöglicht. Allerdings schneiden sich die schräg verlaufenden Ausnehmungen mit den Rändel-Zähnen. Trotzdem ist durch geeignet dimensionierte axiale Länge des Bereiches D unabhängig von den bei allen Varianten der Baugröße der Baureihe verwendeten Verzahnungen sicher gestellt, dass die Festigkeit nicht gefährdet ist. Wesentlich ist dabei, dass die Menge aller verwendeten Verzahnungen des Bereiches F der Baureihe die axiale Länge des Bereiches D bestimmt bzw. von dieser bestimmt wird.

In den Bereich B wird bei der Fertigung der Verzahnung des Bereiches F unabhängig von den Verzahnungsdaten des Bereiches D nicht eingeschnitten. Dies hat zum Vorteil, dass beim Einführen der Welle 1 in die Bohrung 3 des Aufnahmeteils immer dieselbe Führung vorhanden ist. Es besteht also keinerlei Gefahr, dass die Führung infolge ungünstiger Verzahnungsdaten des Bereiches F geschwächt würde.

Der Innendurchmesser der Bohrung des Aufnahmeteils ist im Bereich G' größer oder gleich dem Wert d. Besonders geeignet ist die Toleranz h7. Im Bereich B1 wird zur Erzeugung einer reib- und kraftschlüssigen Verbindung mit dem Bereich G' der Bohrung ein etwas größerer Außendurchmesser als der Wert d verwendet. Somit wird beim Einpressen im Teilbereich B1 Material verformt und eine hoch tragfähige, reibschlüssige Verbindung erzeugt.
Im Bereich B2 wird zur Erzeugung einer Zentrierung beim Einführen der Welle ein gleicher oder etwas kleinerer Außendurchmesser als der Wert d verwendet. Somit wird beim Einführen der Teilbereich B2 eine Zentrierhilfe. Beim weiteren Einführen trägt auch der Teilbereich B1 zur Zentrierung bei. Dies ist insbesondere dann wichtig, wenn der Einpressvorgang des Bereiches D ausgeführt wird, weil dabei nicht-axiale Kräfte entstehen und von der Zentrierhilfe abgeleitet werden.

Eine Spiralnut 2, also eine sich am Umfang entlang schraubende Nut, ist im Bereich B zusätzlich eingebracht und dient zur Entlüftung beim Einführen der Welle 1 in die Bohrung 3 des Aufnahmeteils 4.

Beim Einführen der Welle 1 in das Aufnahmeteil 4 schneidet sich die harte Rändelung des Bereiches D in die Innenwand der Bohrung im Bereich G' ein, da der Durchmesser der Bohrung 3 im Bereich G' kleiner ist als der Außendurchmesser im Bereich D der Welle 1.

Der Innendurchmesser des Bereiches G' der Bohrung 3 des Aufnahmeteils 4 hingegen ist immer gleich und somit kostengünstig und einfach zu fertigen.

Zwischen Bereich D und dem mit Verzahnung versehenen Bereich F liegt der Übergangsbereich E, der einen Übergangsbereich vom größeren Außendurchmesser der Welle im Bereich F auf den kleineren Außendurchmesser im Bereich D darstellt. Dieser Übergang ist in einem ersten erfindungsgemäßen Ausführungsbeispiel gemäß Figur 1a und 1b mit einem Radius realisiert. Somit wird die Empfindlichkeit gegen Kerbwirkung vermindert. Bei weiteren erfindungsgemäßen Ausführungsbeispielen sind andere Radien oder auch andere Formen beim Übergangsbereich vorteilhaft.

In Figur 1b ist außerdem gezeigt, dass bei einem erfindungsgemäßen Ausführungsbeispiel die Bohrung 3 im Aufnahmeteil derart tief ausgeführt ist, dass ein Hohlraum vorhanden ist. Bei weiteren erfindungsgemäßen Ausführungsbeispielen entfällt dieser Hohlraum.

Bei weiteren erfindungsgemäßen Ausführungsbeispielen ist statt der Rändelung auch eine andere Verzahnung verwendbar. Unter Verzahnung ist immer zumindest auch eine Evolventenverzahnung zu verstehen.

Der Wellenbereich B liegt bei in dem Aufnahmeteil befestigter Welle passgenau in dem zugehörigen Teilbereich des Bereiches G'.

Der Bereich H' der Bohrung 3 ist bei einem erfindungsgemäßen Ausführungsbeispiel zur Zentrierung kegelig mit einem Winkel von 60° ausgeführt. Diese Zentrierhilfe erleichtert das Einführen der Welle in die Bohrung 3 und vermindert somit Kosten und Aufwand beim Fertigen. Bei weiteren erfindungsgemäßen Ausführungsbeispielen sind auch andere Winkel oder Zentrierhilfen vorteilhaft ausführbar.

Bei weiteren erfindungsgemäßen Ausführungsbeispielen ist das Aufnahmeteil von einer Kupplung oder einem Motor, insbesondere Elektromotor, umfasst. Insbesondere ist die Rotorwelle des Motors oder ein Wellenstück der Kupplung als erfindungsgemäßes Aufnahmeteil mit erfindungsgemäßer Bohrung ausgeführt.

Bei weiteren erfindungsgemäßen Ausführungsbeispielen ist die Welle eintreibendes Ritzel für ein Getriebe. Somit sind Teile eingespart und mit einem äußerst geringen Fertigungsund Montageaufwand eine formschlüssige Verbindung geschaffen, die mit wenigen Teilen auskommt und schnell und einfach zu montieren ist.

Insbesondere ist bei weiteren erfindungsgemäßen Ausführungsbeispielen die Welle mit ihrem Bereich F mindestens teilweise als Sonne eines Planetengetriebes einsetzbar. Diese direkte Ankoppelung erspart weitere Teile, wie Kupplungen oder dergleichen.

## Patentansprüche

1. Baureihe von Wellen zur Befestigung in einer Bohrung eines Aufnahmeteiles,
wobei die Baureihe mindestens zwei verschiedene Baugrößen umfasst, die jeweils verschiedene Varianten von Wellen umfassen,
**dadurch gekennzeichnet, dass**
a) jede Welle (1) mindestens sechs axiale Bereiche A, B, C, D, E und F besitzt, die in alphabetischer Reihenfolge der sie bezeichnenden Buchstaben aneinandergrenzen und von denen F einen größeren Außendurchmesser als A, B, C, D und/oder E hat,
b) innerhalb einer Baugröße mehrere Varianten von Wellen umfasst sind, die im Bereich F der Welle (1) jeweils verschieden verzahnt sind,
c) bei jeder Welle (1) der Bereich D verzahnt und/oder gerändelt ist,
d) innerhalb einer ersten Baugröße bei mindestens einer ersten Variante die durch die Zahnlücken der Verzahnung des Bereiches F gebildeten Ausnehmungen sich in ihren Fußzonen nicht in den Bereich D der Welle (1) erstrecken, also der Bereich D keinen Teilbereich umfasst, in den sich die Ausnehmungen erstrecken;
e) innerhalb der ersten Baugröße bei mindestens einer zweiten Variante die durch die Zahnlücken der Verzahnung des Bereiches F gebildeten Ausnehmungen sich in ihren Fußzonen mindestens teilweise auch in den Bereich D der Welle (1) erstrecken, also der Bereich D einen Teilbereich umfasst, in den sich die Ausnehmungen erstrecken, und der Bereich D weitere Teilbereiche umfasst, in denen keine solchen Ausnehmungen vorgesehen sind,
f) die Bohrung (3) im Aufnahmeteil (4) mindestens einen einen einzigen Innendurchmesser der Bohrung (3) aufweisenden Bereich G' aufweist, wobei dem Bereich G' bei in dem Aufnahmeteil (4) befestigter Welle (1) mindestens die Bereiche B, C und D zugeordnet sind,
g) der Wellenbereich B bei in dem Aufnahmeteil (4) befestigter Welle (1) passgenau im entsprechenden Teil des Bohrungsbereichs G' liegt,
h) der Außendurchmesser des Bereiches D größer als der Außendurchmesser oder, falls der Bereich B aus verschiedenen Teilbereichen, insbesondere B1 und B2, zusammengesetzt ist, der größte Außendurchmesser des Bereiches B ist,
i) der Außendurchmesser des Bereiches D kleiner als der Außendurchmesser des Bereiches F ist und
j) bei in dem Aufnahmeteil (4) befestigter Welle (1) diese mit ihrem verzahnten Bereich D infolge des Fügevorgangs, umfassend des Einführens der Welle (1) in die Bohrung (3) des Aufnahmeteils (4) formschlüssig in den entsprechenden Teil des Bereiches G' der Bohrung (3) eingeschnitten ist.

2. Baureihe nach mindestens einem der vorangegangenen Ansprüche,
**dadurch gekennzeichnet, dass**
der Bereich B mindestens einen aufnahmeteil-seitigen Teilbereich B2 und mindestens einen weiteren Teilbereich B1 derart umfasst und der Wellenbereich B bei in dem Aufnahmeteil befestigter Welle (1) derart passgenau im entsprechenden Teil des Bohrungsbereichs G' liegt, dass der Teilbereich B2 einen derartigen Außendurchmesser hat, dass der Teilbereich B2 zum Zentrieren beim Einführen der Welle (1) in das Aufnahmeteil (4) beiträgt,
und dass der Außendurchmesser des Bereiches B1 den Innendurchmesser der Bohrung (3) im Bereich G' des Aufnahmeteils (4) derart wertmäßig übertrifft oder ihm gleicht, dass eine reib- und/oder kraftschlüssige Verbindung im Bereich B1 vorsehbar ist, insbesondere zum Übertragen von axialen Kräften.

3. Baureihe nach mindestens einem der vorangegangenen Ansprüche,
**dadurch gekennzeichnet, dass**
das Aufnahmeteil (4) von einer Kupplung oder einem Motor, insbesondere Elektromotor, umfasst wird.

4. Baureihe nach mindestens einem der vorangegangenen Ansprüche,
**dadurch gekennzeichnet, dass**
die Welle (1) eintreibendes Ritzel für ein Getriebe ist.

5. Baureihe von Wellen nach mindestens einem der vorangegangenen Ansprüche,
**dadurch gekennzeichnet, dass**
der Bereich F der Welle (1) mindestens teilweise als Sonne eines Planetengetriebes einsetzbar ist.

6. Baureihe nach mindestens einem der vorangegangenen Ansprüche,
**dadurch gekennzeichnet, dass**
die Verzahnung im Bereich F der Welle (1) schräg verzahnt ausgeführt ist mit einem nichtverschwindenden Schrägungswinkel.

7. Baureihe von Wellen nach mindestens einem der vorangegangenen Ansprüche,
**dadurch gekennzeichnet, dass**
mindestens der Bereich B zumindest teilweise mit einer Spiralnut (2) zum Entlüften versehen ist, also eine sich am Umfang entlang schraubende Nut.

8. Baureihe von Wellen nach mindestens einem der vorangegangenen Ansprüche,
**dadurch gekennzeichnet, dass**
im Bereich C der Welle (1) derart kleinere Werte für Außendurchmesser im Vergleich zum Außendurchmesser des Bereiches B vorgesehen sind, dass beim Einführen der Welle (1) in die Bohrung (3) des Aufnahmeteils (4) im Bereich C ein Spanraum entsteht zur Aufnahme von Spänen.

9. Baureihe nach mindestens einem der vorangegangenen Ansprüche,
**dadurch gekennzeichnet, dass**
der Wellenbereich B bei in dem Aufnahmeteil befestigter Welle (1) derart passgenau im entsprechenden Teil des Bohrungsbereichs ***G'*** liegt, dass der Bereich B mit dem Bereich ***G'*** eine reib- und/oder kraftschlüssige Verbindung zwischen Welle (1) und Aufnahmeteil (4) ist.

10. Baureihe nach mindestens einem der vorangegangenen Ansprüche,
**dadurch gekennzeichnet, dass**
der Bereich D der Welle (1) mit dem Bereich ***G'*** des Aufnahmeteils als formschlüssige Verbindung bei Überlast vorgesehen ist.

11. Baureihe nach mindestens einem der vorangegangenen Ansprüche,
**dadurch gekennzeichnet, dass**
der Bereich H' der Bohrung (3) gleichzeitig als Zentrierhilfe und Fertigungshilfe ausgeführt ist.

12. Baureihe nach mindestens einem der vorangegangenen Ansprüche,
**dadurch gekennzeichnet, dass**
das Aufnahmeteil (4) eine Montagenut (5) aufweist zum Eingreifen und Abstützen eines Werkzeuges, mit der die Welle (1) in das Aufnahmeteil (4) einpressbar ist.

13. Verfahren zur Fertigung einer Baureihe von Wellen zur Befestigung in einer Bohrung eines Aufnahmeteils (4) nach mindestens einem der
vorangegangenen Ansprüche,
**wobei**
während des Einführens und/oder Einpressens eine Temperatur des Aufnahmeteils (4), insbesondere in seinem Inneren, und eine Temperatur der Welle (1), insbesondere in ihrem Inneren, ungleich sind.

14. Verfahren nach Anspruch 13,
**dadurch gekennzeichnet, dass**
die Temperatur des Aufnahmeteils (4) und die Temperatur der Welle (1) sich um mehr als 60 Kelvin unterscheiden.

## Claims

1. A series of shafts for fastening in a bore in a receiving part, wherein the series comprises at least two different structural sizes which comprise different variants of shafts in each case,
**characterized in that**
a) each shaft (1) has at least six axial regions **A, B, C, D, E** and **F** which abut one another in the alphabetical order of the letters designating them and of which F has a greater external diameter than **A, B, C, D** and/or **E,**
b) one structural size includes a plurality of variants of shafts which are toothed in a different manner in each case in the region **F** of the shaft (1),
c) the region **D** in the case of each shaft (1) is toothed and/or knurled,
d) within a first structural size in the case of at least one first variant the recesses formed by the tooth gaps of the toothing of the region **F** do not extend in their root zones into the region **D** of the shaft (1), *i.e*. the region **D** does not comprise a partial region into which the recesses extend;
e) within the first structural size in the case of at least one second variant the recesses formed by the tooth gaps of the toothing of the region **F** also extend in their root zones at least in part into the region **D** of the shaft (1), *i.e.* the region **D** comprises a partial region into which the recesses extend, and the region **D** comprises further partial regions in which no recesses of this type are provided,
f) the bore (3) in the receiving part (4) has at least one region **G'** having a single internal diameter of the bore (3), wherein at least the regions **B, C** and **D** are associated with the region G' when the shaft (1) is fastened in the receiving part (4),
g) the shaft region **B** is situated in an accurately fitting manner in the corresponding part of the bore region **G'** when the shaft (1) is fastened in the receiving part (4),
h) the external diameter of the region **D** is greater than the external diameter of the region **B** or, if the region **B** is formed from different partial regions, in particular **B1** and **B2,** the greatest external diameter of the region **B**,
i) the external diameter of the region **D** is smaller than the external diameter of the region **F,** and
j) when the shaft (1) is fastened in the receiving part (4), the said shaft (1) is cut with its toothed region **D** into the corresponding part of the region **G'** of the bore (3) in a positively locking manner as a result of the joining procedure, comprising the insertion of the shaft (1) into the bore (3) in the receiving part (4).

2. A series according to at least one of the preceding Claims, **characterized in that** the region B comprises at least one partial region **B2** on the side towards the receiving part and at least one further partial region **B1** in such a way and, when the shaft (1) is fastened in the receiving part, the shaft region B is situated in an accurately fitting manner in the corresponding part of the bore region **G'** in such a way that the said partial region **B2** has an external diameter such that the partial region **B2** contributes to the centring when the shaft (1) is introduced into the receiving part (4), and the external diameter of the region **B1** exceeds or equals the internal diameter of the bore (3) in the region **G**' of the receiving part (4) in terms of its value in such a way that it is possible for a connexion with friction locking and/or non-positive locking to be provided in the region **B1,** in particular in order to transmit axial forces.

3. A series according to at least one of the preceding Claims, **characterized in that** the receiving part (4) is embraced by a coupling or a motor, in particular an electric motor.

4. A series according to at least one of the preceding Claims, **characterized in that** the shaft (1) is a driving pinion for a gear mechanism.

5. A series of shafts according to at least one of the preceding Claims, **characterized in that** the region **F** of the shaft (1) is capable of being used at least in part as the sun wheel of a planetary gear mechanism.

6. A series according to at least one of the preceding Claims, **characterized in that** the toothing in the region **F** of the shaft (1) is made obliquely toothed with a non-vanishing angle of inclination.

7. A series of shafts according to at least one of the preceding Claims, **characterized in that** at least the region **B** is provided at least in part with a helical groove (2) for aeration, *i.e.* a groove extending helically along the periphery.

8. A series of shafts according to at least one of the preceding Claims, **characterized in that** smaller values for external diameters are provided in the region **C** of the shaft (1) as compared with the external diameter of the region **B** in such a way that when the shaft (1) is inserted into the bore (3) of the receiving part (4) in the region **C** a chipping space is formed in order to receive chippings.

9. A series according to at least one of the preceding Claims, **characterized in that** when the shaft (1) is fastened in the receiving part the shaft region **B** is arranged in an accurately fitting manner in the corresponding part of the bore region **G'** in such a way that the region **B** with the region **G'** [forms] a connexion with friction locking and/or non-positive locking between the shaft (1) and the receiving part (4).

10. A series according to at least one of the preceding Claims, **characterized in that** the region **D** of the shaft (1) with the region **G'** of the receiving part is provided as a connexion with friction locking in the event of overloading.

11. A series according to at least one of the preceding Claims, **characterized in that** the region **H'** of the bore (3) is constructed at the same time as a centring aid and a production aid.

12. A series according to at least one of the preceding Claims, **characterized in that** the receiving part (4) has an mounting groove (5) for the engagement and support of a tool by which the shaft (1) is capable of being force-fitted into the receiving part (4).

13. A method of producing a series of shafts for listening in a bore in a receiving part (4) according to at least one of the preceding Claims, wherein, during the insertion and/or force-fitting, a temperature of the receiving part (4), in particular in its interior, and a temperature of the shaft (1), in particular in its interior, are unequal.

14. A method according to Claim 13, **characterized in that** the temperature of the receiving part (4) and the temperature of the shaft (1) differ by more than 60 Kelvin.

## Revendications

1. Gamme d'arbres destinés à être fixés dans un perçage d'une pièce réceptrice,
la gamme comprenant au moins deux tailles de construction différentes qui comprennent chacune différentes variantes d'arbres,
**caractérisée en ce que**
a) chaque arbre (1) possède au moins six zones axiales A, B, C, D, E et F qui sont adjacentes dans l'ordre alphabétique des lettres qui les désignent et parmi lesquelles F a un plus grand diamètre extérieur que A, B, C, D et/ou E ;
b) au sein d'une taille de construction sont comprises plusieurs variantes d'arbres qui présentent chaque fois une denture différente dans la zone F de l'arbre (1) ;
c) sur chaque arbre (1), la zone D est dentée et/ou moletée ;
d) au sein d'une première taille de construction, dans au moins une première variante, les évidements formés par les entre-dents de la denture de la zone F ne s'étendent pas dans leurs zones de pied dans la zone D de l'arbre (1), donc la zone D ne comprend aucune zone partielle dans laquelle les évidements s'étendent ;
e) au sein de la première taille de construction, dans au moins une deuxième variante, les évidements formés par les entre-dents de la denture de la zone F s'étendent dans leurs zones de pied au moins en partie aussi dans la zone D de l'arbre (1), donc la zone D comprend une zone partielle dans laquelle s'étendent les évidements et la zone D comprend d'autres zones partielles dans lesquelles aucun de ces évidements n'est prévu ;
f) le perçage (3) dans la pièce réceptrice (4) présente au moins une zone G' présentant un seul diamètre intérieur du perçage (3), au moins les zones B, C et D étant associées à la zone G' lorsque l'arbre (1) est fixé dans la pièce réceptrice (4) ;
g) la zone d'arbre B est en ajustement précis dans la partie correspondante de la zone de perçage G' lorsque l'arbre (1) est fixé dans la pièce réceptrice (4) ;
h) le diamètre extérieur de la zone D est supérieur au diamètre extérieur ou, si la zone B est composée de différentes zones partielles, en particulier B1 et B2, au plus grand diamètre extérieur de la zone B ;
i) le diamètre extérieur de la zone D est inférieur au diamètre extérieur de la zone F et
j) lorsque l'arbre (1) est fixé dans la pièce réceptrice (4), celui-ci est entaillé par sa zone dentée D, par suite de l'opération d'assemblage comprenant l'introduction de l'arbre (1) dans le perçage (3) de la pièce réceptrice (4), par complémentarité de formes dans la partie correspondante de la zone G' du perçage (3).

2. Gamme selon au moins l'une des revendications précédentes,
**caractérisée en ce que**
la zone B comprend au moins une zone partielle côté pièce réceptrice B2 et au moins une autre zone partielle B1 et la zone d'arbre B est en ajustement précis dans la partie correspondante de la zone de perçage G' lorsque l'arbre (1) est fixé dans la pièce réceptrice (4) de telle manière que la zone partielle B2 ait un diamètre extérieur tel que la zone partielle B2 contribue au centrage lors de l'introduction de l'arbre (1) dans la pièce réceptrice (4),
et que le diamètre extérieur de la zone B1 est supérieur ou égal en valeur au diamètre intérieur du perçage (3) dans la zone G' de la pièce réceptrice (4) de telle manière qu'une liaison par friction et/ou par adhérence puisse être prévue dans la zone B1, en particulier pour la transmission de forces axiales.

3. Gamme selon au moins l'une des revendications précédentes,
**caractérisée en ce que**
la pièce réceptrice (4) est comprise par un accouplement ou un moteur, en particulier un moteur électrique.

4. Gamme selon au moins l'une des revendications précédentes,
**caractérisée en ce que**
l'arbre (1) est un pignon menant pour un réducteur.

5. Gamme d'arbres selon au moins l'une des revendications précédentes,
**caractérisée en ce que**
la zone F de l'arbre (1) est utilisable au moins en partie comme planétaire d'un réducteur planétaire.

6. Gamme selon au moins l'une des revendications précédentes,
**caractérisée en ce que**
la denture dans la zone F de l'arbre (1) est réalisée sous forme de denture hélicoïdale avec un angle d'hélice non infinitésimal.

7. Gamme d'arbres selon au moins l'une des revendications précédentes,
**caractérisée en ce que**
au moins la zone B est pourvue au moins en partie d'une rainure hélicoïdale (2) pour la purge d'air, donc d'une rainure s'étendant en spirale le long de la périphérie.

8. Gamme d'arbres selon au moins l'une des revendications précédentes,
**caractérisée en ce que**
dans la zone C de l'arbre (1), il est prévu des valeurs suffisamment petites du diamètre extérieur par rapport au diamètre extérieur de la zone B pour que, lors de l'introduction de l'arbre (1) dans le perçage (3) de la pièce réceptrice (4), il se forme dans la zone C un logement pour la réception de copeaux.

9. Gamme selon au moins l'une des revendications précédentes,
**caractérisée en ce que**
la zone d'arbre B est en ajustement précis dans la partie correspondante de la zone de perçage G' lorsque l'arbre (1) est fixé dans la pièce réceptrice, de telle manière que la zone B forme avec la zone G' une liaison par friction et/ou par adhérence entre l'arbre (1) et la pièce réceptrice (4).

10. Gamme selon au moins l'une des revendications précédentes,
**caractérisée en ce que**
la zone D de l'arbre (1) est prévue avec la zone G' de la pièce réceptrice comme liaison par complémentarité de formes en cas de surcharge.

11. Gamme selon au moins l'une des revendications précédentes,
**caractérisée en ce que**
la zone H' du perçage (3) est réalisée à la fois comme aide au centrage et comme aide à la fabrication.

12. Gamme selon au moins l'une des revendications précédentes,
**caractérisée en ce que**
la pièce réceptrice (4) présente une rainure de montage (5) pour l'engagement et l'appui d'un outil à l'aide duquel l'arbre (1) peut être emmanché dans la pièce réceptrice (4).

13. Procédé de fabrication d'une gamme d'arbres destinés à être fixés dans un perçage d'une pièce réceptrice (4) selon au moins l'une des revendications précédentes,
**selon lequel**
pendant l'introduction et/ou l'emmanchement, une température de la pièce réceptrice (4), en particulier à l'intérieur de celle-ci, et une température de l'arbre (1), en particulier à l'intérieur de celui-ci, sont inégales.

14. Procédé selon la revendication 13,
**caractérisé en ce que**
la température de la pièce réceptrice (4) et la température de l'arbre (1) diffèrent de plus de 60 kelvins.
